# EUROPEAN PATENT APPLICATION

(11) **EP 3 468 204 A1**
(43) Date of publication of application: **10.04.2019**
(21) Application number: 17806376.4
(22) Date of filing: 17.05.2017
(51) Int. Cl.: H04N 21/236, H04H 20/28, H04H 60/35, H04H 60/65, H04H 60/74, H04N 21/435

(54) **TRANSMISSION DEVICE, TRANSMISSION METHOD, RECEPTION DEVICE, AND RECEPTION METHOD**

(30) Priority: 31.05.2016 JP 2016109483
(71) Applicant: Sony Corporation, Tokyo 108-0075 (JP)
(72) Inventor: TSUKAGOSHI, Ikuo, Tokyo 108-0075 (JP)
(74) Representative: 2SPL Patentanwälte PartG mbB
(86) International application number: PCT/JP2017/018483
(87) International publication number: WO 2017/208818

(57) **Abstract**

To simplify transmission of a plurality of types of subtitle information.

A predetermined number of subtitle streams each having one piece or two or more pieces of subtitle information is generated, and a container of a predetermined format including the predetermined number of subtitle streams is transmitted. A reception side extracts one subtitle stream from the predetermined number of subtitle streams, extracts one piece of subtitle information from the one subtitle stream, decodes the one piece of subtitle information, and controls subtitle display.

## Description

### TECHNICAL FIELD

The present technology relates to a transmission device, a transmission method, a reception device, and a reception method, and in particular to a transmission device that transmits a plurality of types of subtitle information in parallel, and the like.

### BACKGROUND ART

Recently, transmission of subtitle information in text character code, that is, on a text basis has been proposed. In this case, font development according to resolution is performed on a reception side. For example, Timed Text Markup Language (TTML) has been proposed by the World Wide Web Consortium (W3C) (see Patent Document 1).

### CITATION LIST

### PATENT DOCUMENT

Patent Document 1: Japanese Patent Application Laid-Open No. 2012-169885

### SUMMARY OF THE INVENTION

### PROBLEMS TO BE SOLVED BY THE INVENTION

It is known that a plurality of subtitle streams each including a plurality of types of subtitle information having different languages or content is transmitted in parallel, and a reception side selects a stream to perform desired subtitle display. In this case, the number of subtitle streams increases as the types of subtitle information increase, and there is concern that multiplexing on a transmission side becomes complicated due to synchronization.

An object of the present technology is to simplify transmission of a plurality of types of subtitle information.

### SOLUTIONS TO PROBLEMS

The concept of the present technology lies in
a transmission device including:
a subtitle encoding unit configured to generate a predetermined number of subtitle streams each having one piece or two or more pieces of subtitle information; and
a transmission unit configured to transmit a container of a predetermined format including the predetermined number of subtitle streams.

In the present technology, the predetermined number of subtitle streams each having one piece or two or more pieces of subtitle information is generated by the subtitle encoding unit. For example, each of the predetermined number of subtitle streams may have segmented subtitle information. The container of a predetermined format including the predetermined number of subtitle streams is transmitted by the transmission unit.

For example, the subtitle encoding unit maybe configured to generate a plurality of subtitle streams each having subtitle information of a different language, and each of the plurality of subtitle streams may have a plurality of pieces of subtitle information each having different content. Furthermore, for example, the subtitle encoding unit may be configured to generate a plurality of subtitle streams each having subtitle information of different content, and each of the plurality of subtitle streams may have a plurality of pieces of subtitle information each having a different language.

As described above, in the present technology, the subtitle stream including a plurality of pieces of subtitle information can be generated and transmitted. Therefore, even if the type of subtitle information increases, an increase in the number of subtitle streams can be suppressed, and thus transmission of a plurality of types of subtitle information can be simplified.

Note that, in the present technology, for example, an information insertion unit configured to insert information regarding each of the predetermined number of subtitle streams into the container may be further included. For example, the information regarding each of the subtitle streams may include flag information indicating whether or not a corresponding subtitle stream has a plurality of pieces of subtitle information, identification information identifying a corresponding subtitle stream, identification information identifying each subtitle information that a corresponding subtitle stream has, and the like. A reception side becomes able to control display processing of user interface information for a user to perform a selection operation for desired subtitle display on the basis of the information regarding each of the predetermined number of subtitle streams .

Furthermore, another concept of the present technology lies in
a reception device including:
a reception unit configured to receive a container of a predetermined format including a predetermined number of subtitle streams each having one piece or two or more pieces of subtitle information; and
a control unit configured to control first extraction processing of extracting one subtitle stream from the predetermined number of subtitle streams and second extraction processing of extracting one piece of subtitle information from the extracted one subtitle stream.

In the present technology, the container of a predetermined format including the predetermined number of subtitle streams each having one piece or two or more pieces of subtitle information is received by the reception unit. The first extraction processing of extracting one subtitle stream from the predetermined number of subtitle streams and the second extraction processing of extracting one piece of subtitle information from the extracted one subtitle stream are controlled by the control unit.

For example, information regarding each of the predetermined number of subtitle streams is inserted in the container, and the control unit may be configured to further control display processing of user interface information for the first extraction processing and the second extraction processing on the basis of the information regarding each of the predetermined number of subtitle streams. In this case, the user can appropriately and efficiently perform the selection operation of the subtitle information on the basis of the user interface information.

As described above, in the present technology, one subtitle stream is extracted from the predetermined number of subtitle streams, and one piece of subtitle information is further extracted from the extracted one subtitle stream. Therefore, even in a case where a predetermined number of subtitle streams include a subtitle stream including a plurality of pieces of subtitle information, desired subtitle display can be made.

### EFFECTS OF THE INVENTION

According to the present technology, transmission of a plurality of types of subtitle information can be simplified. Note that the effects described in the present specification are merely examples and are not limited, and additional effects may be exhibited.

### BRIEF DESCRIPTION OF DRAWINGS

Fig. 1 is a block diagram illustrating a configuration example of a transmission/reception system as an embodiment.
Fig. 2 is a diagram illustrating an example of subtitle information that a plurality of subtitle streams has.
Fig. 3 is a diagram illustrating a flow of subtitle information extraction processing for performing desired subtitle display from subtitle streams 1 and 2, and a diagram illustrating a display example of user interface information.
Fig. 4 is a diagram illustrating an example of time-series change in a subtitle stream extracted in stream extraction processing.
Fig. 5 is a block diagram illustrating a configuration example of a stream generation unit of a broadcast transmission system 100.
Fig. 6 is a diagram illustrating an example of a TTML structure.
Fig. 7 is a diagram illustrating a structural example of a subtitle PES packet and a structural example of "PES_data_byte_field()".
Fig. 8 is a diagram illustrating a structural example of a subtitle segment and content of main information in the structural example.
Fig. 9 is a diagram illustrating an example of definition of segment type.
Fig. 10 is a diagram illustrating a structural example of a segment payload in a case where the segment type is "0×84".
Fig. 11 illustrates content of main information in the structural example of the segment payload.
Fig. 12 is a diagram illustrating a structural example of a text subtitle descriptor.
Fig. 13 is a diagram illustrating content of main information in the structural example of the text subtitle descriptor.
Fig. 14 is a diagram illustrating an example of definition of packet type.
Fig. 15 is a diagram illustrating a structural example of a font file descriptor.
Fig. 16 is a diagram illustrating a configuration example of a transport stream TS including subtitle streams 1 and 2.
Fig. 17 is a block diagram illustrating a configuration example of a television receiver.
Fig. 18 is a diagram for describing that selection of a stream and selection of a TTML segment are performed on the basis of user's or system's selection information.
Fig. 19 is a diagram illustrating an example of subtitle information that a plurality of subtitle streams has.
Fig. 20 is a diagram illustrating a flow of subtitle information extraction processing for performing desired subtitle display from subtitle streams 1, 2, and 3 and a diagram illustrating a display example of user interface information.
Fig. 21 is a diagram illustrating a configuration example of a transport stream TS including subtitle streams 1, 2, and 3.

### MODE FOR CARRYING OUT THE INVENTION

Hereinafter, a mode for implementing the present invention (hereinafter referred to as an "embodiment") will be described. Note that the description will be given in the following order.
1. Embodiment
2. Modification

### <1. Embodiment>

### [Configuration Example of Transmission/Reception System]

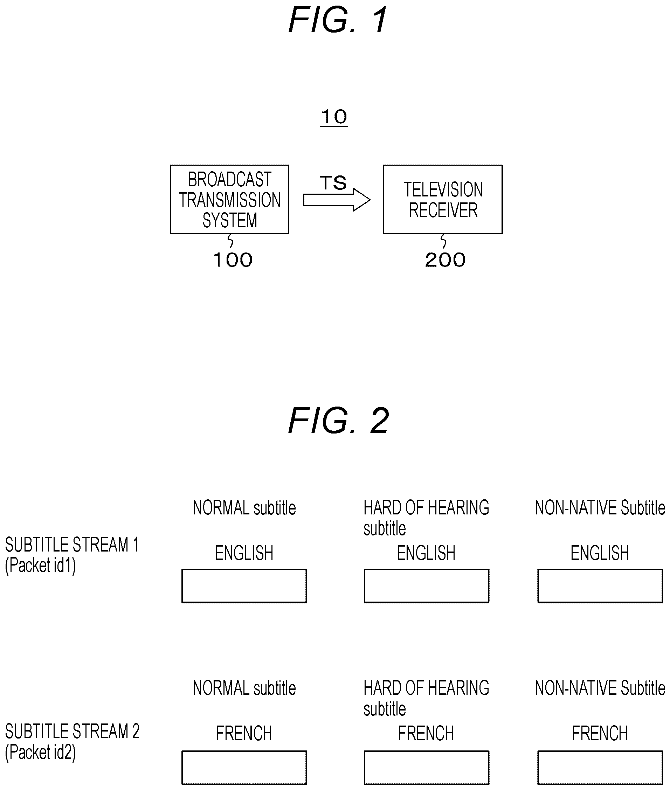

Fig. 1 illustrates a configuration example of a transmission/reception system 10 as an embodiment. The transmission/reception system 10 is configured by a broadcast transmission system 100 and a television receiver 200. The broadcast transmission system 100 transmits a transport stream of MPEG-2 TS as a container (multiplexed stream) (hereinafter the transport stream will be simply referred to as "transport stream TS") on a broadcast wave.

The transport stream TS includes a predetermined number of subtitle streams together with a video stream having video data and an audio stream having audio data. Each of the predetermined number of subtitle streams has one piece or two or more pieces of subtitle information. As the subtitle information, text information of a subtitle (caption), for example, TTML, a derivative format of the TTML, or the like can be considered. In this embodiment, the subtitle information is the TTML, and the subtitle stream has segmented subtitle information.

The broadcast transmission system 100 inserts information regarding each of the predetermined number of subtitle streams into the transport stream TS as a container. This information includes, for example, flag information indicating whether or not a corresponding subtitle stream has a plurality of pieces of subtitle information, identification information identifying the corresponding subtitle stream, identification information identifying each subtitle information that the corresponding subtitle stream has, and the like. With the information insertion, a reception side can appropriately perform display processing of user interface information for a user to perform a selection operation for desired subtitle display.

The television receiver 200 receives the transport stream TS sent from the broadcast transmission system 100. The television receiver 200 applies decoding processing to the video stream having video data to obtain the video data and applies decoding processing to the audio stream having audio data to obtain the audio data.

The television receiver 200 extracts one subtitle stream from the predetermined number of subtitle streams and extracts one piece of subtitle information from the extracted one subtitle stream according to a user's selection operation. Then, the television receiver 200 applies decoding processing to the extracted one piece of subtitle information to obtain bitmap data of a subtitle, and superimposes the bitmap data on the video data to obtain video data for display.

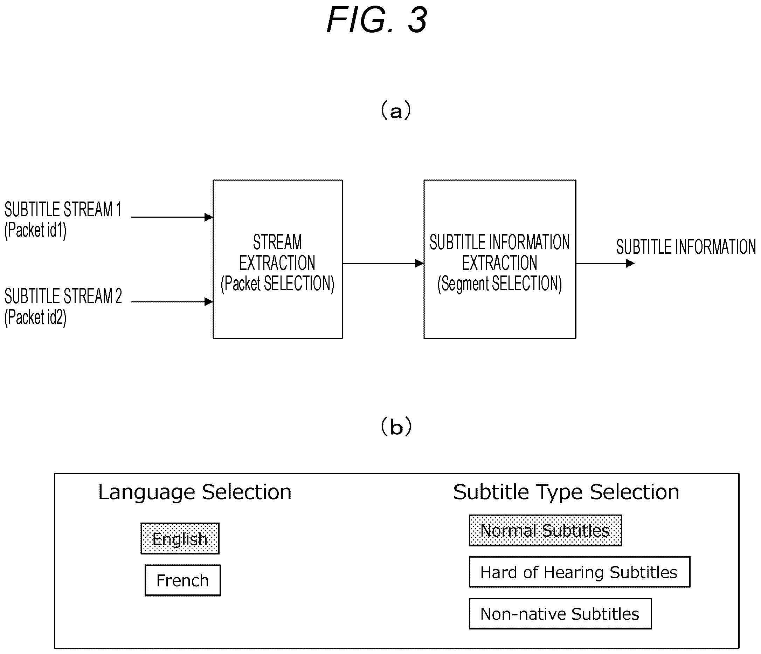

In this case, the television receiver 200 displays the user interface information (see Fig. 3(b)) for the convenience of the user's selection operation on the basis of the information regarding each of the predetermined number of subtitle streams inserted in the transport stream TS. The user can easily control the desired subtitle display by performing the selection operation on the basis of the user interface information.

In this embodiment, it is assumed that a subtitle stream 1 (Packet id1) and a subtitle stream 2 (Packet id2) are included in the transport stream TS, and each of the subtitle stream 1 and the subtitle stream 2 has three pieces of subtitle information. Fig. 2 illustrates an example of the subtitle information that the subtitle streams 1 and 2 have.

Here, the subtitle stream 1 has three pieces of subtitle information with the language of "English" and the content of"normal", "hard of hearing", and "non-native", respectively. Furthermore, the subtitle stream 2 has three pieces of subtitle information with the language of "French" and the content of "normal", "hard of hearing", and "non-native", respectively.

Fig. 3(a) illustrates a flow of subtitle information extraction processing for performing desired subtitle display from the subtitle streams 1 and 2 in the television receiver 200. First, in stream extraction processing (first extraction processing), a subtitle stream including the subtitle information for performing the desired subtitle display is extracted from the subtitle streams 1 and 2. Next, in subtitle information extraction processing (second extraction processing), the subtitle information for performing the desired subtitle display is extracted from the extracted subtitle stream.

Fig. 3(b) illustrates a display example of the user interface information for the user's selection operation. In language selection "Language Selection", selection of "English" or "French" is possible. Furthermore, in content selection "Subtitle Type Selection", selection of "normal subtitle (Normal Subtitle) ", "hard of hearing subtitle (Hard of Hearing Subtitle)", or "non-native subtitle (Non-native Subtitle)" is possible. The illustrated example indicates a state in which "normal subtitle" in "English" has been selected.

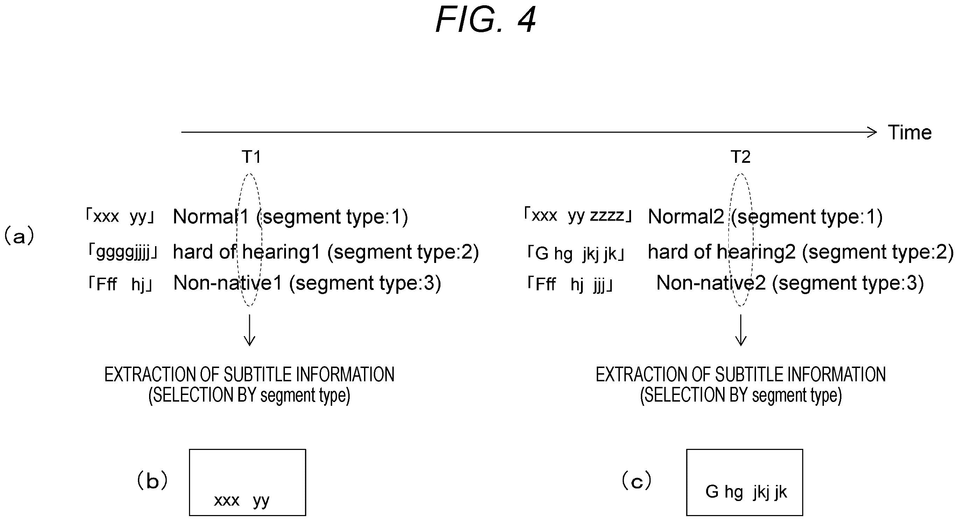

Fig. 4 (a) illustrates an example of time-series change in a subtitle stream extracted in the stream extraction processing. The subtitle stream with display timing of T1 has subtitle information of "Normal1", "Hard of hearing1", and "Non-nativel".

Here, "Normal1" has a segment type of 1 because of normal subtitle information, and is subtitle information for displaying "xxx yy", for example. "Hard of hearing1" has a segment type of 2 because of hard of hearing subtitle information, and is subtitle information displaying "ggggjjjj", for example. "Non-nativel" has a segment type of 3 because of non-native subtitle information, and is subtitle information displaying "Fff hi", for example.

Fig. 4 (b) illustrates a subtitle display example in the case where the subtitle information of "Normal1" has been extracted from the subtitle stream with the display timing of T1 in the subtitle information extraction processing.

Furthermore, the subtitle stream with display timing of T2 has subtitle information of "Normal2", "Hard of hearing2", and "Non-native2".

Here, "Normal2" has a segment type of 1 because of normal subtitle information, and is subtitle information for displaying "xxx yy zzzz", for example. "Hard of hearing2" has a segment type of 2 because of hard of hearing subtitle information, and is subtitle information displaying "G hg jkj jk", for example. "Non-native2" has a segment type of 3 because of non-native subtitle information, and is subtitle information displaying "Fff hi jjj", for example.

Fig. 4(c) illustrates a subtitle display example in the case where the subtitle information of "Hard of hearing2" has been extracted from the subtitle stream with the display timing of T2 in the subtitle information extraction processing.

### [Configuration Example of Stream Generation Unit of Broadcast Transmission System]

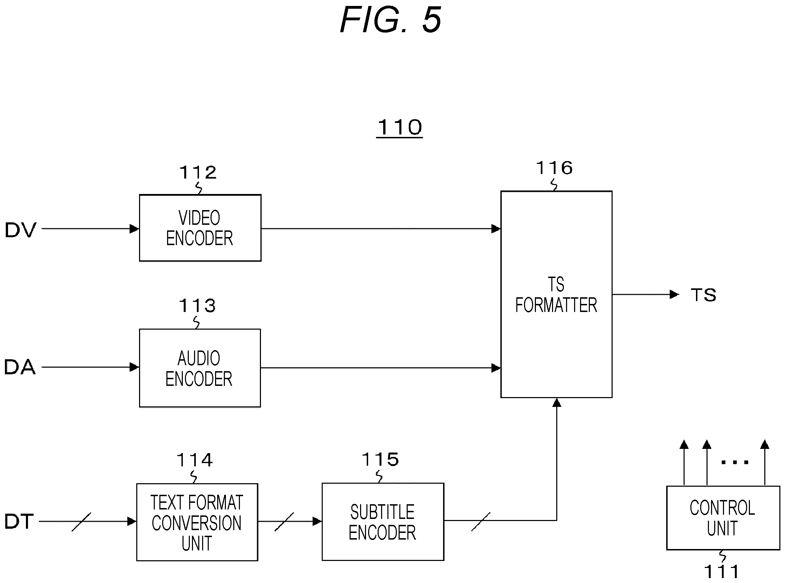

Fig. 5 illustrates a configuration example of a stream generation unit 110 of the broadcast transmission system 100 . The stream generation unit 110 includes a control unit 111, a video encoder 112, an audio encoder 113, a text format conversion unit 114, a subtitle encoder 115, and a TS formatter (multiplexer) 116.

The control unit 111 has a configuration including a central processing unit (CPU), for example, and controls operation of each unit of the stream generation unit 110. The video encoder 112 inputs video data DV and applies encoding to the video data DV to generate a video stream configured by a video PES packet having encoded video data in payload. The audio encoder 113 inputs audio data DA and applies encoding to the audio data DA to generate an audio stream configured by an audio PES packet having encoded audio data.

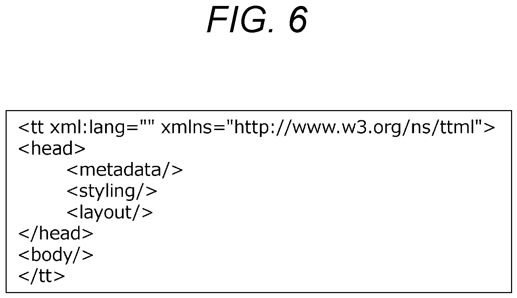

The text format conversion unit 114 inputs text data (character code) DT and obtains Timed Text Markup Language (TTML) as subtitle information. Fig. 6 illustrates an example of a TTML structure. The TTML is described on an XML basis. The TTML includes a head and a body. In the head, elements such as metadata, styling, styling extension, and layout exist.

The metadata includes information of a title of the metadata, information of copyright, and the like. The styling includes information such as a position of region, a size, a color, a font (fontFamily), a font size (fontSize), and text alignment (textAlign), in addition to an identifier (id). The layout includes information such as offset (padding), a background color (backgroundColor), and alignment (displayAlign), in addition to an identifier (id) of the region where the subtitle is arranged. The body includes information of the subtitle. Display start timing and display end timing are described and text data is described for each subtitle.

The text format conversion unit 114 obtains a plurality of types of TTML corresponding to the same display timing. In this embodiment, six types of TTML including (1) TTML with the language of "English" and the content of "normal", (2) TTML with the language of "English" and the content of "hard of hearing", (3) TTML with the language of "English" and the content of "non-native", (4) TTML with the language of "French" and the content of "normal", (5) TTML with the language of "French" and the content of "hard of hearing", and (6) TTML with the language of "French" and the content of "non-native" are obtained.

The subtitle encoder 115 converts the six types of TTML obtained in the text format conversion unit 114 into segments (TTML segments). Then, the subtitle encoder 115 generates a subtitle stream 1 including a subtitle PES packet in which the TTML segments of the above (1) to (3) with the language of "English" are arranged in the payload, and generates a subtitle stream 2 including a subtitle PES packet in which the TTML segments of the above (4) to (6) with the language of "French" are arranged in the payload.

Note that, in this embodiment, at least a font download segment (Font_download_segment) having download information for downloading a file of a font designated in font designation information of the TTML is also included in the subtitle streams 1 and 2. In other words, the subtitle encoder 115 inserts the font download segment into the payload of the subtitle PES packet configuring each of the subtitle streams 1 and 2.

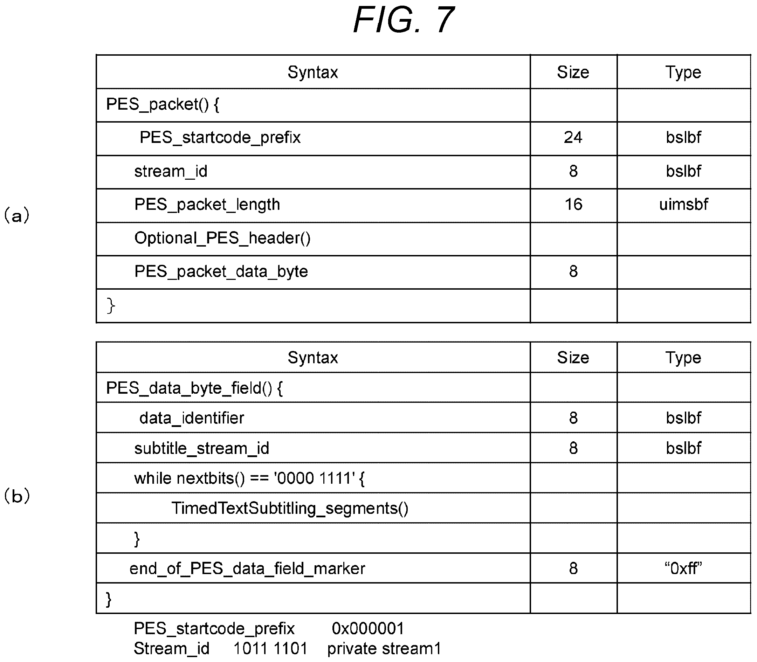

Fig. 7 (a) illustrates a structural example (Syntax) of the subtitle PES packet (PES_packet). A fixed pattern of "0x000001" is arranged in a 24-bit field of "PES_startcode_ prefix". An 8-bit field of "stream_id" indicates a stream identifier. In the case of the subtitle PES packet, the stream identifier is "10111101" that is a value indicating "private stream1. A 16-bit field of "PES_packet_length" indicates the number of subsequent bytes as the length (size) of the PES packet.

A field of "Optional_PES_header()" exists after "PES_packet_length". In this field, time stamps such as PTS and DTS are arranged. After this field, a field of "PES_packet_data_byte" exists. This field corresponds to a PES payload. In this field, "PES_data_byte_field()" for storing data is arranged.

Fig. 7 (b) illustrates a structural example (Syntax) of "PES_data_byte_field()". An 8-bit field of "data_identifier" indicates an identifier for identifying a type of data in a container portion. Since a conventional subtitle (in the case of bitmap) is supposed to be indicated by "0x20", the subtitle can be identified with a new value, for example, "0x21" in the case of text.

An 8-bit field of "subtitle_stream_id" indicates an identifier for identifying the type of subtitle stream. In a case of a subtitle stream transmitting text information, the type is set to a new value, for example, "0x01" and can be distinguish from a subtitle stream "0x00", which transmits a conventional bitmap.

After this field of "subtitle_stream_id", a field of "TimedTextSubtitling_segments()" exists following a pattern of "00001111". In this field, a subtitle segment (Subtitle_segment) is arranged. After this field, an 8-bit field of "end_of_PES_data_field_marker" exists. This field is a marker indicating end of the PES packet.

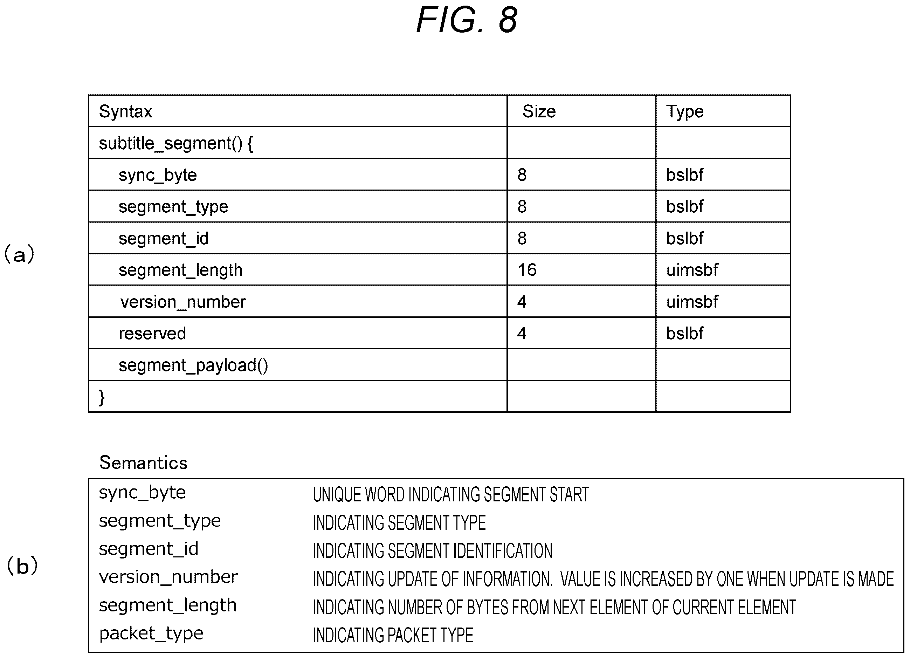

Fig. 8 (a) illustrates a structural example (Syntax) of the subtitle segment. Fig. 8(b) illustrates content (Semantics) of main information in the structural example and the like. An 8-bit field of "sync_byte" is a unique word indicating segment start. An 8-bit field of "segment_type" indicates a segment type.

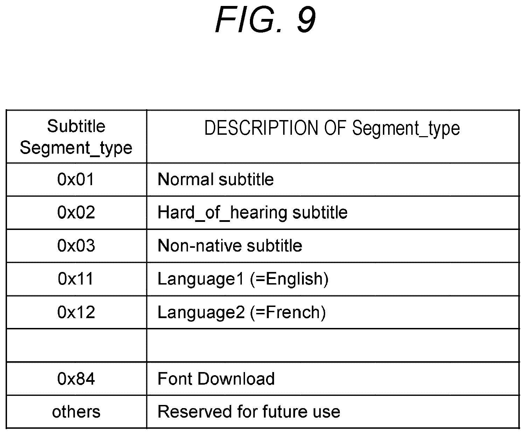

Fig. 9 illustrates an example of definition of the segment type (segment_type). For example, "0x01" indicates a normal subtitle (Normal subtitle), "0x02" indicates a hard of hearing subtitle (Hard_of_hearing subtitle), and "0x03" indicates a non-native subtitle (Non-native subtitle) . Furthermore, for example, "0x11" indicates a subtitle of language 1 (English) and "0x12" indicates a subtitle of language 2 (French). Moreover, for example, "0x84" indicates font download (Font Download).

Referring back to Fig. 8(a), an 8-bit field of "segment_id" indicates segment identification. A 16-bit field of "segment_length" indicates the number of subsequent bytes as the length (size) of the subtitle segment. A 4-bit field of "version_number" indicates update of information. In a case where update is performed, a value increases by one at a time.

In a case where the segment type is "0x01", "0x02", "0x03", "0x11", or "0x12", a TTML document (see Fig. 6) is arranged in the field of "segment_payload()".

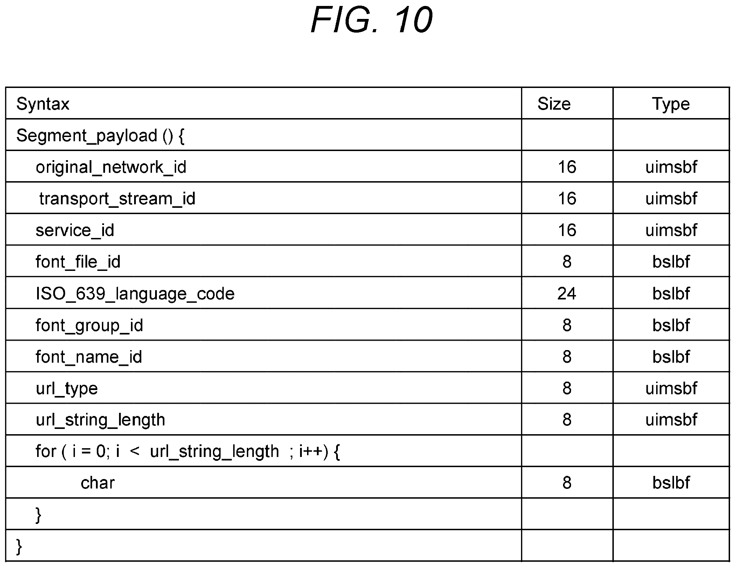

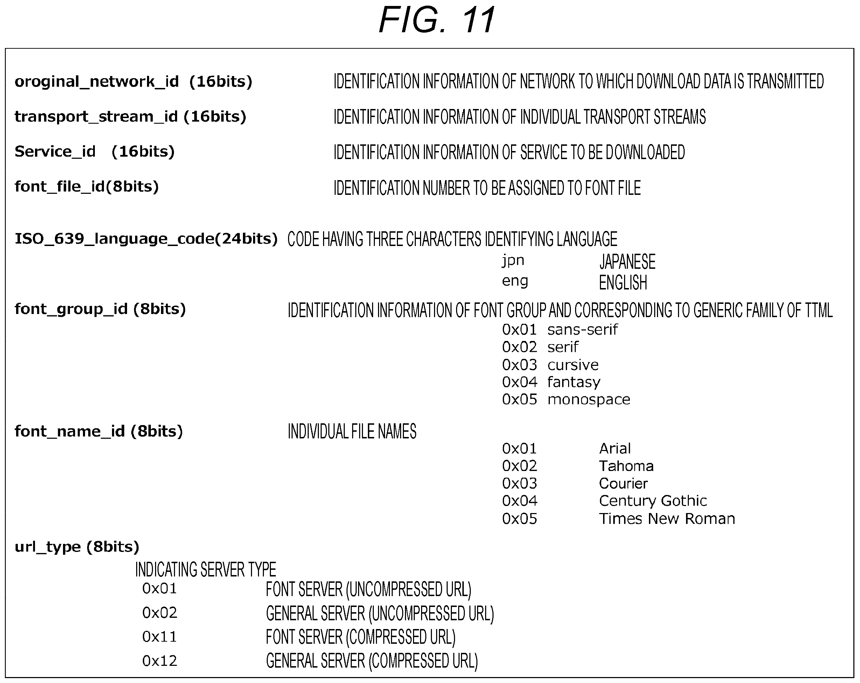

Fig. 10 illustrates a structural example (Syntax) of the segment payload (segment_payload()) in a case where the segment type is "0x84", and Fig. 11 illustrates content (Semantics) of main information in the structural example.

A 16-bit field of "original_network_id" indicates identification information of a network to which download data is transmitted. A 16-bit field of "transport_stream_id" indicates identification information of individual transport streams. A 16-bit field of "service_id" indicates identification information of a service to be downloaded. In a case of a download target common to distribution media, a font file may be sent not by its own transport stream but by another transport stream, and as information for specifying a referenced private section in that case, the information of "original_network_id", "transport_stream_id", and "service_id" can be designated.

An 8-bit field of "font_file_id" indicates an identification number assigned to the font file. A 24-bit field of "ISO_639_language_code" indicates a code having three characters for identifying a language. For example, "jpn" indicates Japanese and "eng" indicates English. An 8-bit field of "font_group_id" indicates identification information of a font group and corresponds to the generic family of TTML. An 8-bit field of "font_name_id" indicates individual font names.

An 8-bit field of "url_type" indicates a type of a server. For example, "0x01" indicates a font server (uncompressedURL), "0x02" indicates a general server (uncompressed URL), "0x11" indicates a font server (compressed URL), and "0x12" indicates a general server (compressed URL). An 8-bit field of "url_string_length" indicates the length (size) of a character code portion indicating a character string of subsequent URL in the number of bytes. The character code is arranged in the field of "char".

Referring back to Fig. 5, the TS formatter 116 Transport-packetizes and multiplexes the video stream generated in the video encoder 112, the audio stream generated in the audio encoder 113, and the subtitle streams 1 and 2 generated in the subtitle encoder 115, thereby to obtain the transport stream TS as a container (multiplexed stream).

In this case, the TS formatter 116 inserts information regarding each of the two subtitle streams 1 and 2 included in the transport stream TS into a program map table (PMT). Specifically, the TS formatter 116 generates a text subtitle descriptor (Text_subtitle_descriptor) to be newly defined and having the information, and inserts the text subtitle descriptor into a subtitle elementary stream loop (Subtitle ES loop) corresponding to each of the subtitle streams 1 and 2.

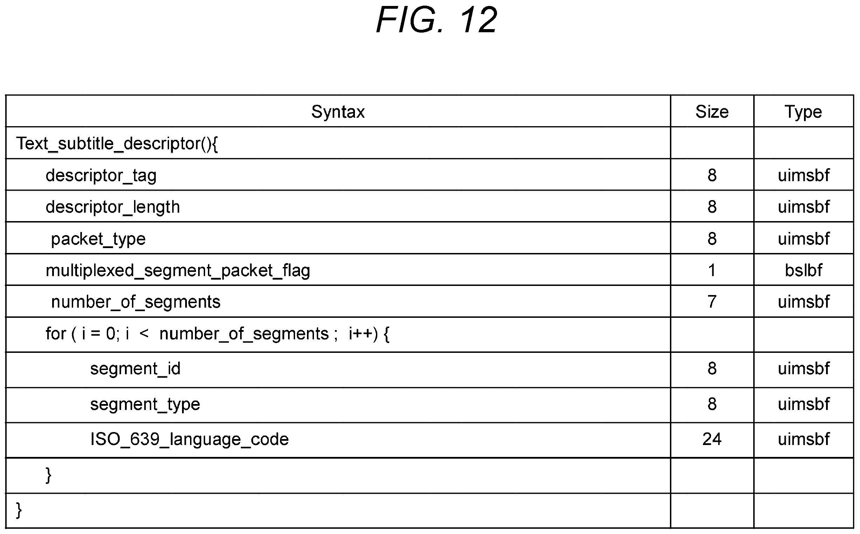

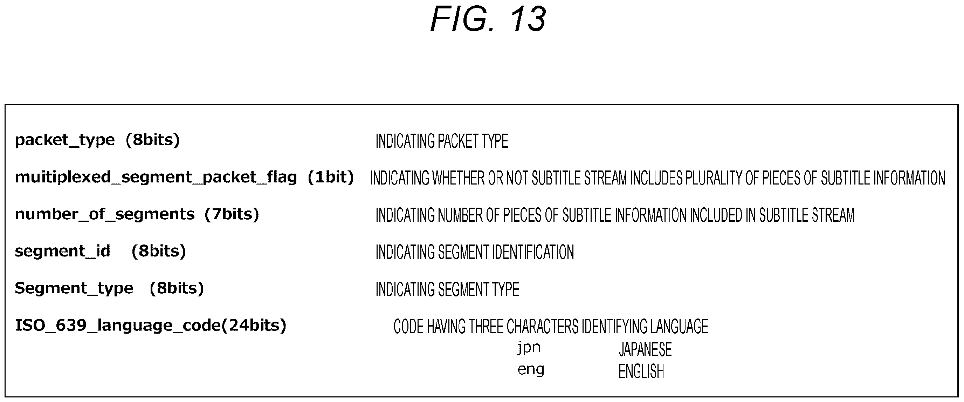

Fig. 12 illustrates a structural example (Syntax) of the text subtitle descriptor. Fig. 13 illustrates content (Semantics) of main information in the structural example. An 8-bit field of "descriptor_tag" indicates a descriptor type, which indicates here the text subtitle descriptor. An 8-bit field of "descriptor_length" indicates the length (size) of the descriptor and indicates the number of subsequent bytes as the length of the descriptor.

An 8-bit field of "packet_type" indicates a packet type, as illustrated in Fig. 8(b).

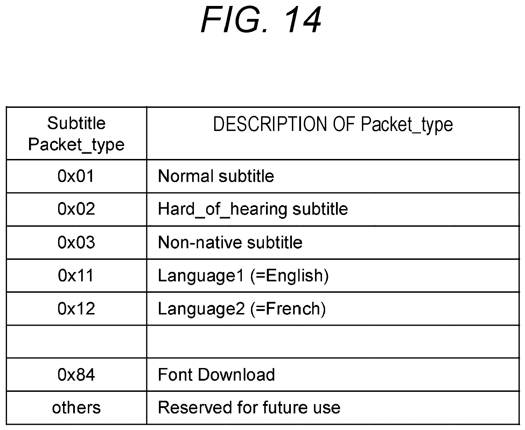

Fig. 14 illustrates an example of definition of the packet type (packet_type). For example, "0x01" indicates a normal subtitle (Normal subtitle), "0x02" indicates a hard of hearing subtitle (Hard_of_hearing subtitle), and "0x03" indicates a non-native subtitle (Non-native subtitle) . Furthermore, for example, "0x11" indicates a subtitle of language 1 (English) and "0x12" indicates a subtitle of language 2 (French). Moreover, for example, "0x84" indicates font download (Font Download).

Referring back to Fig. 12, a 1-bit field of "multiplexed_segment_packet_flag" indicates whether or not the subtitle stream includes a plurality of pieces of subtitle information. A 7-bit field of "number_of_segments" indicates the number of pieces of subtitle information included in the subtitle stream. Then, the 8-bit field of "segment_id", the 8-bit field of "segment_type", and the 24-bit field of "ISO_639_language_code" are repeatedly present as many as the number of pieces of subtitle information. A field of "segment_id" indicates segment identification. A field of "segment_type" indicates a segment type. "ISO_639_language_code" indicates a code having three characters for identifying a language.

Note that, in this embodiment, at least a font file descriptor (Font_file_descriptor) having download information for downloading a file of a font designated in font designation information of the TTML is inserted into the subtitle elementary stream loop (Subtitle ES loop) corresponding to each of the subtitle streams 1 and 2.

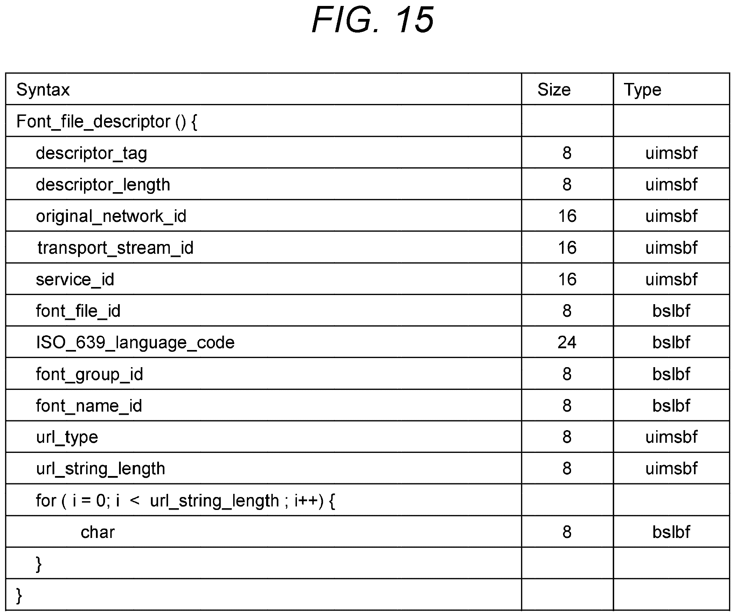

Fig. 15 illustrates a structural example (Syntax) of the font file descriptor. An 8-bit field of "descriptor_tag" indicates a descriptor type, which indicates here the font file descriptor. An 8-bit field of "descriptor_length" indicates the length (size) of the descriptor and indicates the number of subsequent bytes as the length of the descriptor. Note that the other fields are similar to the structural example of the segment payload in the case where the segment type illustrated in Fig. 10 is "0x84", so detailed description thereof is omitted.

An operation of the stream generation unit 110 illustrated in Fig. 5 will be briefly described. The video data DV is supplied to the video encoder 112. In the video encoder 112, encoding is applied to the video data DV, and a video stream including a video PES packet having encoded image data in the payload is generated. This video stream is supplied to the TS formatter 116.

Furthermore, the audio data DA is supplied to the audio encoder 113. In the audio encoder 113, encoding is applied to the audio data DA, and an audio stream including an audio PES packet having encoded audio data is generated. This audio stream is supplied to the TS formatter 116.

Furthermore, the text data (character code) DT is supplied to the text format conversion unit 114. In the text format conversion unit 114, TTML as caption information is obtained (see Fig. 6). In this case, six types of TTML are obtained corresponding to the same display timing. In other words, six types of TTML including (1) TTML with the language of "English" and the content of "normal", (2) TTML with the language of "English" and the content of "hard of hearing", (3) TTML with the language of "English" and the content of "non-native", (4) TTML with the language of "French" and the content of "normal", (5) TTML with the language of "French" and the content of "hard of hearing", and (6) TTML with the language of "French" and the content of "non-native" are obtained.

The six types of TTML obtained in the text format conversion unit 114 are supplied to the subtitle encoder 115. In the subtitle encoder 115, the six types of TTML are converted into segments (TTML segments) (see Fig. 8 (a) and Fig. 6). Then, in the subtitle encoder 115, a subtitle stream 1 including a subtitle PES packet in which the TTML segments of the above (1) to (3) with the language of "English" are arranged in the payload is generated, and a subtitle stream 2 including a subtitle PES packet in which the TTML segments of the above (4) to (6) with the language of "French" are arranged in the payload is generated. These subtitle streams 1 and 2 are supplied to the TS formatter 116.

Note that, in the subtitle encoder 115, at least the font download segment (Font_download_segment) having download information for downloading a file of a font designated in font designation information of the TTML is also included in the subtitle streams 1 and 2 (see Fig. 8(a) and Fig. 10).

In the TS formatter 116, the video stream generated in the video encoder 112, the audio stream generated in the audio encoder 113, and the subtitle streams 1 and 2 generated in the subtitle encoder 115 are transport-packetized and multiplexed, and transport stream TS as a container (multiplexed stream) is generated.

In this case, in the TS formatter 116, a text subtitle descriptor (Text_subtitle_descriptor) having information regarding a corresponding subtitle stream is inserted (see Fig. 12), and moreover, at least a font file descriptor (Font_file_descriptor) having download information for downloading a file of a font designated in font designation information of the TTML is inserted (see Fig. 15) into the subtitle elementary stream loop (Subtitle ES loop) corresponding to each of the subtitle streams 1 and 2 under the PMT.

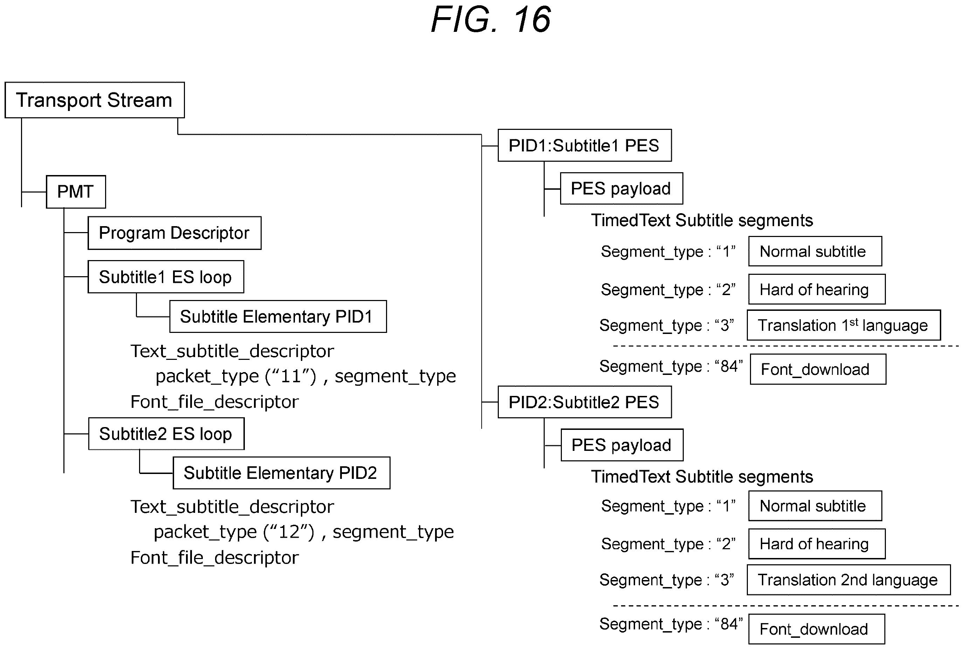

"Configuration Example of Transport Stream TS" Fig. 16 illustrates a configuration example of the transport stream TS. In this configuration example, configurations of video and audio parts are omitted. In this configuration example, a subtitle 1 PES packet "Subtitle 1 PES" that is a PES packet of the subtitle stream 1 identified with PID1 exists and a subtitle 2 PES packet "Subtitle 2 PES" that is a PES packet of the subtitle stream 2 identified with PID2 exists.

In the subtitle 1 PES packet, three types of TTML segments having subtitle information with the language of English (= 1st language) are inserted in the PES payload. In other words, in this PES payload, a TTML segment of normal subtitle (Normal subtitle) with the segment type of "0x01", a hard of hearing subtitle (Hard_of_hearing subtitle) with the segment type of "0x02", and a TTML segment of non-native subtitle (Non-native subtitle) with the segment type of "0x03" are inserted. Furthermore, in this PES payload, a font download segment having a segment type of "0x84" is also inserted.

Similarly, in the subtitle 2 PES packet, three types of TTML segments having subtitle information with the language of French (= 2nd language) are inserted in the PES payload. In other words, in this PES payload, a TTML segment of normal subtitle (Normal subtitle) with the segment type of "0x01", a hard of hearing subtitle (Hard_of_hearing subtitle) with the segment type of "0x02", and a TTML segment of non-native subtitle (Non-native subtitle) with the segment type of "0x03" are inserted. Furthermore, in this PES payload, a font download segment having a segment type of "0x84" is also inserted.

Furthermore, the transport stream TS includes a program map table (PMT) as program specific information (PSI) . This PSI is information describing which program each elementary stream included in the transport stream TS belongs to. In the PMT, a program descriptor that describes information related to the entire program exists.

In this PMT, subtitle 1 elementary stream loop (Subtitle 1 ES loop) having information related to the subtitle stream 1 exists. Inthisloop, information such as a packet identifier (PID) is arranged and a descriptor describing information related to the subtitle stream is also arranged corresponding to the subtitle stream 1.

As this descriptor, a text subtitle descriptor (Text_subtitle_descriptor) and font file descriptor (Font_file_descriptor) are inserted (see Figs. 12 and 15) . The text subtitle descriptor has information regarding a corresponding subtitle stream. In this case, the packet type is "0x11". The font file descriptor has at least download information for downloading a file of a font designated in font designation information of TTML.

Furthermore, in this PMT, subtitle 2 elementary stream loop (Subtitle 2 ES loop) having information related to the subtitle stream 2 exists. In this loop, information such as a packet identifier (PID) is arranged and a descriptor describing information related to the subtitle stream is also arranged corresponding to the subtitle stream 2.

As this descriptor, a text subtitle descriptor (Text_subtitle_descriptor) and font file descriptor (Font_file_descriptor) are inserted (see Figs. 12 and 15) . The text subtitle descriptor has information regarding a corresponding subtitle stream. In this case, the packet type is "0x12". The font file descriptor has at least download information for downloading a file of a font designated in font designation information of TTML.

### [Configuration Example of Television Receiver]

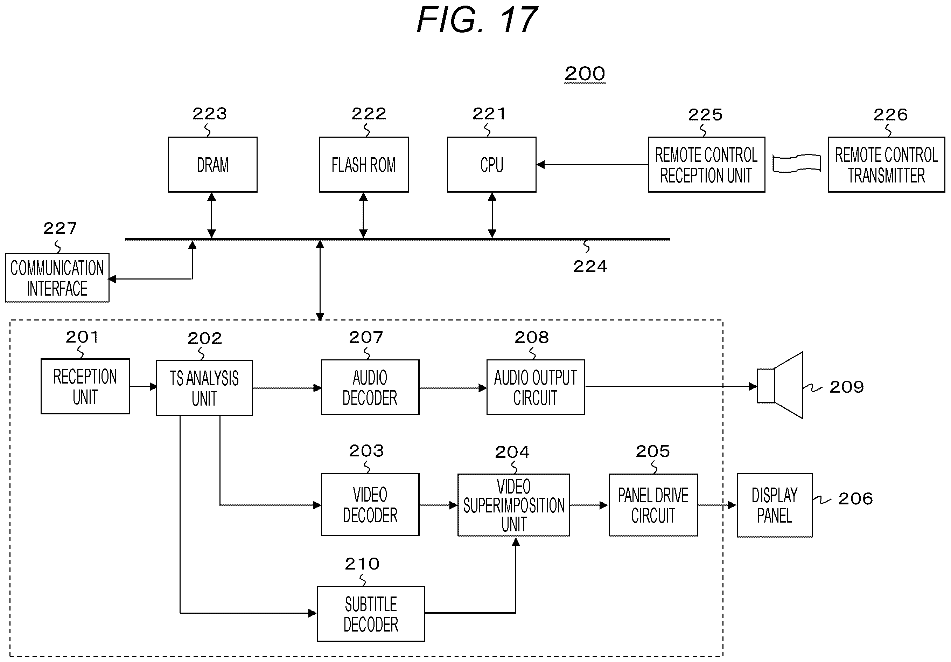

Fig. 17 illustrates a configuration example of the television receiver 200. The television receiver 200 includes a reception unit 201, a TS analysis unit (demultiplexer) 202, a video decoder 203, a video superimposition unit 204, a panel drive circuit 205, and a display panel 206 as a monitor (display). Furthermore, the television receiver 200 includes an audio decoder 207, an audio output circuit 208, a speaker 209, and a subtitle decoder 210. Furthermore, the television receiver 200 includes a CPU 221, a flash ROM 222, a DRAM 223, an internal bus 224, a remote control reception unit 225, a remote control transmitter 226, and a communication interface 227.

The CPU 221 controls operation of each unit of the television receiver 200. The flash ROM 222 stores control software and stores data. The DRAM 223 configures a work area of the CPU 221. The CPU 221 develops the software and data read from the flash ROM 222 on the DRAM 223, activates the software, and controls each unit of the television receiver 200.

The remote control reception unit 225 receives a remote control signal (remote control code) transmitted from the remote control transmitter 226, and supplies the remote control code to the CPU 221. The CPU 221 controls each unit of the television receiver 200 on the basis of the remote control code. The CPU 221, the flash ROM 222, and the DRAM 223 are connected to the internal bus 224.

The communication interface 227 performs communication with a server existing on a network such as the Internet under the control of the CPU 221. The communication interface 227 is connected to the internal bus 224.

The reception unit 201 receives the transport stream TS transmitted on the broadcast wave from the broadcast transmission system 100. As described above, the transport stream TS includes the video stream, the audio stream, and the subtitle streams 1 and 2. The TS analysis unit 202 extracts streams of a video, an audio, and a subtitle from the transport stream TS.

In this case, the TS analysis unit 202 analyzes various types of information inserted in the header of each TS packet, and selectively extracts a TS packet including data of each PES packet of the video, the audio, or the subtitle on the basis of "PID" to obtain each stream of the video, the audio, or the subtitle.

Furthermore, the TS analysis unit 202 analyzes the various types of information inserted in the header of each TS packet, extracts various types of information inserted in the transport stream TS on the basis of "PID", and sends the information to the CPU 221. This information also includes the text subtitle descriptor and the font file descriptor (see Figs. 12 and 15).

The CPU 221 obtains information regarding a corresponding subtitle stream from the text subtitle descriptor. This information includes, for example, flag information indicating whether or not the corresponding subtitle stream has a plurality of pieces of subtitle information, identification information identifying the corresponding subtitle stream, identification information identifying each subtitle information that the corresponding subtitle stream has, and the like. Furthermore, the CPU 221 acquires at least information for downloading a file of a font designated in font designation information of TTML from the font file descriptor.

The audio decoder 207 applies decoding processing to the audio stream extracted in the TS analysis unit 202 to obtain the audio data. The audio output circuit 208 applies necessary processing such as D/A conversion and amplification to the audio data, and supplies the audio data to the speaker 209. The video decoder 203 applies decoding processing to the video stream extracted in the TS analysis unit 202 to obtain the video data.

The subtitle decoder 210 applies decoding processing to the subtitle stream extracted in the TS analysis unit 202 to obtain the TTML from the timed text subtitle segment (TimedText subtitle segments).

In this case, only one of the two subtitle streams 1 and 2 included in the transport stream TS is selectively extracted and supplied from the TS analysis unit 202 to the subtitle decoder 210. Furthermore, in the subtitle decoder 210, only one of the three TTML segments included in the subtitle stream supplied from the TS analysis unit 202 is selectively extracted and decoded to obtain the TTML.

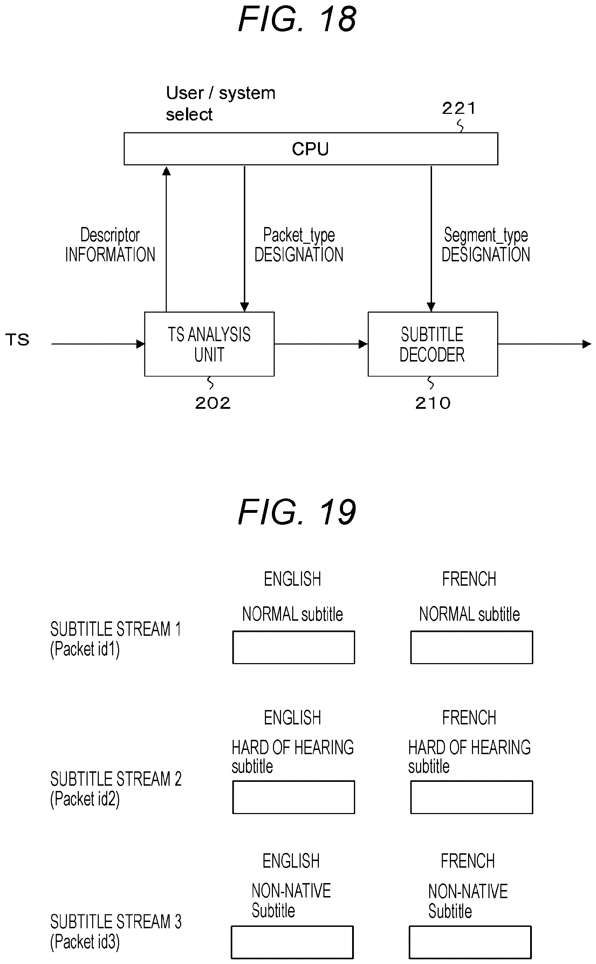

Selection of the stream is performed as the CPU 221 supplies information of the packet type (Packet_type) (see Fig. 14) to the TS analysis unit 202, that is, the packet type is designated, as illustrated in Fig. 18, on the basis of user's or system's language selection information. As described above, in the user interface information for the user's selection operation illustrated in Fig. 3(b), the user can select "English" or "French" in the language selection "Language Selection operation". Note that the user interface information is displayed on the display panel 206 on the basis of the information regarding each of the predetermined number of subtitle streams under the control of the CPU 221.

For example, in a case where "English" is selected, the packet type is "0x11", and the TS analysis unit 202 extracts the subtitle stream 1. Furthermore, for example, in a case where "French" is selected, the packet type is "0x12", and the TS analysis unit 202 extracts the subtitle stream 2.

Furthermore, selection of the TTML segment is performed as the CPU 221 supplies information of the segment type (Segment_type) (see Fig. 9) to the subtitle decoder 210, that is, the segment type is designated, as illustrated in Fig. 18, on the basis of user's or system's content selection information. As described above, in the user interface information for the user's selection operation illustrated in Fig. 3(b), the user can select "normal subtitle (Normal Subtitle)", "hard of hearing subtitle (Hard of Hearing Subtitle)", or "non-native subtitle (Non-native Subtitle)" is possible in the content selection "Subtitle Type Selection".

For example, in the case where "normal subtitle (Normal Subtitle)" is selected, the segment type is "0x01", and the subtitle decoder 210 extracts a TTML segment including "normal" TTML. Furthermore, for example, in a case where "hard of hearing subtitle (Hard of Hearing Subtitle) " is selected, the segment type is "0x02", and the subtitle decoder 210 extracts a TTML segment including "hard of hearing" TTML. Furthermore, for example, in a case where "non-native subtitle (Non-native Subtitle)" is selected, the segment type is "0x03", and the subtitle decoder 210 extracts a TTML segment including "non-native" TTML.

The subtitle decoder 210 sends TTML, which has been obtained by applying decoding processing to the extracted one TTML segment, to the CPU 221. The CPU 221 acquires caption display position information and the like from the TTML.

Furthermore, the subtitle decoder 210 extracts the font download segment (see Fig. 8(a) and Fig. 10) included in the subtitle stream (PES packet) extracted in the TS analysis unit 202, and sends the font download segment to the CPU 221. The CPU 221 acquires at least information for downloading a file of a font designated in font designation information of the TTML from the font download segment.

Furthermore, the subtitle decoder 210 converts text data (font data) of the caption (subtitle) at each caption display position (region) included in the TTML into bitmap data (binary image information) under the control of the CPU 221.

Here, the subtitle decoder 210 uses the file of the font designated in the font designation information of the TTML when obtaining the bitmap data of the caption under the control of the CPU 221. When the television receiver 200 does not have the font file designated in the font designation information, the CPU 221 appropriately downloads the font file from a broadcast signal (transport stream TS) or a server on the network on the basis of the download information inserted in the PES packet, the PMT, or the like, as described above, and uses the downloaded font file. Note that, when the file cannot be downloaded, the CPU 221 uses a substitute font file (for example, a default font file).

The video superimposition unit 204 superimposes the bitmap data of the caption at each caption display position obtained in the subtitle decoder 210 on the video data obtained in the video decoder 203 to obtain display video data under the control of the CPU 221. In this case, the CPU 221 performs control such that a superimposition position of the bitmap data of the caption is located at the caption display position determined by the subtitle display position information.

The panel drive circuit 205 drives the display panel 206 on the basis of the display video data obtained in the video superimposition unit 204. The display panel 206 is configured by, for example, a liquid crystal display (LCD), an organic electroluminescence (EL) display, or the like.

An operation of the television receiver 200 illustrated in Fig. 17 will be briefly described. In the reception unit 201, the transport stream TS transmitted on the broadcast wave from the broadcast transmission system 100 is received. The transport stream TS includes the video stream, the audio stream, and the subtitle streams 1 and 2. The transport stream TS is supplied to the TS analysis unit 202. In the TS analysis unit 202, the streams of the video, the audio, and the subtitle are extracted from the transport stream TS.

Furthermore, in the TS analysis unit 202, various types of information inserted in the transport stream TS are extracted and sent to the CPU 221. This information also includes the text subtitle descriptor and the font file descriptor (see Figs. 12 and 15).

With the information, the CPU 221 obtains the information regarding the corresponding subtitle stream from the text subtitle descriptor. Furthermore, in the CPU 221, at least information for downloading a file of a font designated in font designation information of TTML is acquired from the font file descriptor.

The video stream extracted in the TS analysis unit 202 is supplied to the video decoder 203. In the video decoder 203, decoding processing is applied to the video PES stream and the video data is obtained.

Furthermore, the subtitle stream extracted in the TS analysis unit 202 is supplied to the subtitle decoder 210. In the subtitle decoder 210, decoding processing is applied to the subtitle stream, and the TTML is obtained from the timed text subtitle segments.

In this case, only one of the two subtitle streams 1 and 2 included in the transport stream TS is selectively extracted and supplied from the TS analysis unit 202 to the subtitle decoder 210. Furthermore, in the subtitle decoder 210, only one of the three TTML segments included in the subtitle stream supplied from the TS analysis unit 202 is selectively extracted and decoded to obtain the TTML.

Selection of the stream in the TS analysis unit 202 is performed under the control of the CPU 221 on the basis of the user's or system's language selection information. Note that selection of the TTML segment in the subtitle decoder 210 is performed under the control of the CPU 221 on the basis of the user's or system's language selection information. The user can cause a desired subtitle to be displayed by selecting language and content.

In the subtitle decoder 210, the font download segment is extracted from the subtitle stream obtained in the TS analysis unit 202 and is sent to the CPU 221. In the CPU 221, at least information for downloading a file of a font designated in font designation information of TTML is acquired from the font download segment.

The TTML obtained in the subtitle decoder 210 is sent to the CPU 221. In the CPU 221, the caption display position information and the like are acquired from the TTML.

Furthermore, in the subtitle decoder 210, the font download segment (see Fig. 8 (a) and Fig. 10) included in the subtitle stream (PES packet) extracted in the TS analysis unit 202 is extracted and is sent to the CPU 221. In the CPU 221, at least information for downloading a file of a font designated in font designation information of the TTML is acquired from the font download segment.

Furthermore, in the subtitle decoder 210, the text data (font data) of the caption (subtitle) at each caption display position (region) included in the TTML is converted into bitmap data (binary image information) under the control of the CPU 221.

Here, in the subtitle decoder 210, the file of the font designated in the font designation information of the TTML is used when the bitmap data of the caption is obtained under the control of the CPU 221. When the television receiver 200 does not have the font file designated in the font designation information, the CPU 221 appropriately downloads the font file from a broadcast signal (transport stream TS) or a server on the network on the basis of the download information inserted in the PES packet, the PMT, or the like, as described above, and uses the downloaded font file. Note that, when the file cannot be downloaded, the CPU 221 uses a substitute font file (for example, a default font file).

The bitmap data of the caption at each caption display position output from the subtitle decoder 210 is supplied to the video superimposition unit 204. In the video superimposition unit 204, the bitmap data of the caption at each caption display position obtained in the subtitle decoder 210 is superimposed on the video data obtained in the video decoder 203, and the display video data is obtained. In this case, the superimposed position of the bitmap data of the caption is controlled, by the CPU 221, to be located at the caption display position on the basis of the caption display position determined by the caption display position information.

The display video data obtained in the video superimposition unit 204 is supplied to the panel drive circuit 205. In the panel drive circuit 205, the display panel 206 is driven on the basis of the display video data. With the operation, an image in which the caption (subtitle) is superimposed on each caption display position (region) is displayed on the display panel 206.

Furthermore, the audio stream extracted in the TS analysis unit 202 is supplied to the audio decoder 207. In the audio decoder 207, decoding processing is applied to the audio stream, and the audio data is obtained. This audio data is supplied to the audio output circuit 208. In the audio output circuit 208, necessary processing such as D/A conversion and amplification is performed on the audio data. Then, the processed audio data is supplied to the speaker 209. As a result, a sound output corresponding to the display image on the display panel 206 is obtained from the speaker 209.

As described above, in the transmission/reception system 10 illustrated in Fig. 1, the broadcast transmission system 100 generates and transmits a subtitle stream including a plurality of pieces of subtitle information (TTML segments) . Therefore, even if the type of subtitle information increases, an increase in the number of subtitle streams can be suppressed, and thus transmission of a plurality of types of subtitle information can be simplified.

Furthermore, in the transmission/reception system 10 illustrated in Fig. 1, the broadcast transmission system 100 inserts the information regarding each of the predetermined number of subtitle streams to the subtitle stream TS as a container and transmits the container. Therefore, the reception side becomes able to control display processing of the user interface information for the user to perform the selection operation for desired subtitle display on the basis of the information regarding each of the predetermined number of subtitle streams.

Furthermore, in the transmission/reception system 10 illustrated in Fig. 1, the television receiver 200 extracts one subtitle stream from the predetermined number of subtitle streams, and further extracts one piece of subtitle information (TTML segment) from the extracted one subtitle stream. Therefore, even in a case where a predetermined number of subtitle streams include a subtitle stream including a plurality of pieces of subtitle information, desired subtitle display can be made.

### <2. Modification>

Note that, in the above-described embodiment, the case in which the subtitle stream 1 (Packet id1) having the three pieces of subtitle information (TTML segments) with the language of "English" and the content of "normal", "hard of hearing" and "non-native" and the subtitle stream 2 (Packet id2) having the three pieces of subtitle information (TTML segments) with the language of "French" and the content of "normal", "hard of hearing", and "non-native" are included in the transport stream TS generated in the broadcast transmission system 100 has been described.

However, an example in which a subtitle stream 1 (Packet id1) having subtitle information (TTML segment) with content of "normal", a subtitle stream 2 (Packet id2) having subtitle information (TTML segment) with content of "hard of hearing", and a subtitle stream 3 (Packet id3) having subtitle information (TTML segment) with content of "non-native" are included in a transport stream TS generated in a broadcast transmission system 100 can also be considered.

Fig. 19 illustrates an example of subtitle information that the subtitle streams 1, 2, and 3 have. Here, the subtitle stream 1 has two pieces of subtitle information with the content of "normal" and languages of "English" and "French", respectively. Furthermore, the subtitle stream 2 has two pieces of subtitle information with the content of "hard of hearing" and languages of "English" and "French", respectively. Furthermore, the subtitle stream 3 has two pieces of subtitle information with the content of "non-native" and languages of "English" and "French", respectively.

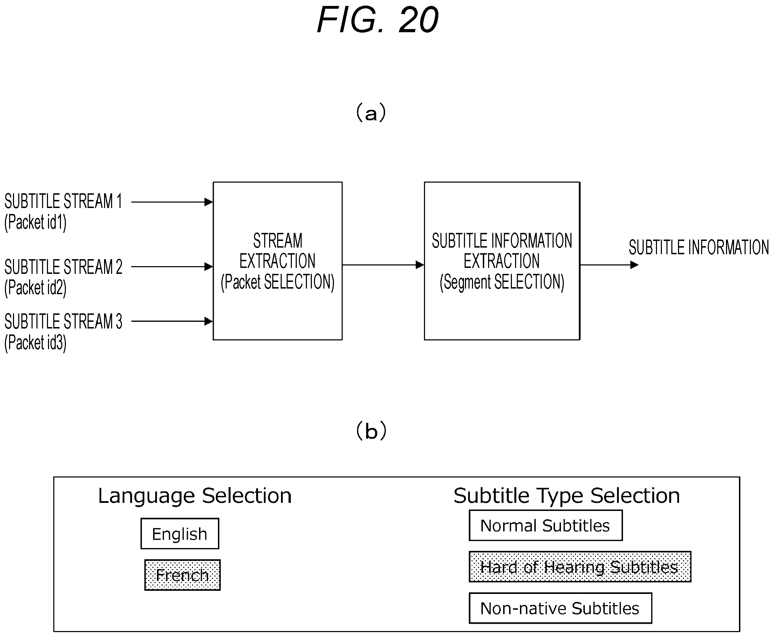

Fig. 20 (a) illustrates a flow of processing of extracting subtitle information for performing desired subtitle display from subtitle streams 1, 2, and 3 in a television receiver 200 in a case where the subtitle streams 1, 2, and 3 are included in a transport stream TS, as described above.

First, in stream extraction processing (first extraction processing), a subtitle stream including the subtitle information for performing desired subtitle display is extracted from the subtitle streams 1, 2, and 3. Next, in subtitle information extraction processing (second extraction processing), the subtitle information for performing desired subtitle display is extracted from the extracted subtitle stream.

Fig. 20(b) illustrates a display example of the user interface information for the user's selection operation. In language selection "Language Selection", selection of "English" or "French" is possible. Furthermore, in content selection "Subtitle Type Selection", selection of "normal subtitle (Normal Subtitle) ", "hard of hearing subtitle (Hard of Hearing Subtitle)", or "non-native subtitle (Non-native Subtitle)" is possible. The illustrated example indicates a state in which "hard of hearing subtitle" in "French" has been selected.

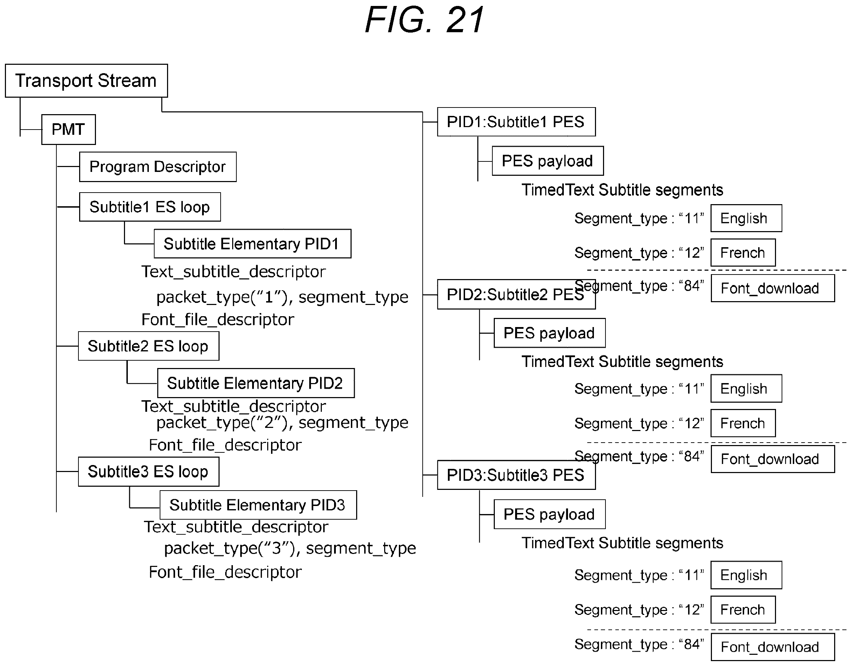

Fig. 21 illustrates a configuration example of the transport stream TS including the subtitle streams 1, 2, and 3. In this configuration example, configurations of video and audio parts are omitted. In this configuration example, a subtitle 1 PES packet "Subtitle 1 PES" that is a PES packet of the subtitle stream 1 identified with PID1, a subtitle 2 PES packet "Subtitle 2 PES" that is a PES packet of the subtitle stream 2 identified with PID2, and further, a subtitle 3 PES packet "Subtitle 3 PES" that is a PES packet of the subtitle stream 3 identified with PID3 exist.

In the subtitle 1 PES packet, two types of TTML segments having subtitle information with the content of normal are inserted in a PES payload. In other words, in this PES payload, a TTML segment of English subtitle with the segment type of "0x11", a TTML segment of French subtitle with the segment type of "0x12" are inserted. Furthermore, in this PES payload, a font download segment having a segment type of "0x84" is also inserted.

Similarly, in the subtitle 2 PES packet, two types of TTML segments having subtitle information with the content of hard of hearing are inserted in a PES payload. In other words, in this PES payload, a TTML segment of English subtitle with the segment type of "0x11", a TTML segment of French subtitle with the segment type of "0x12" are inserted. Furthermore, in this PES payload, a font download segment having a segment type of "0x84" is also inserted.

Similarly, in the subtitle 3 PES packet, two types of TTML segments having subtitle information with the content of non-native are inserted in a PES payload. In other words, in this PES payload, a TTML segment of English subtitle with the segment type of "0x11", a TTML segment of French subtitle with the segment type of "0x12" are inserted. Furthermore, in this PES payload, a font download segment having a segment type of "0x84" is also inserted.

Furthermore, the transport stream TS includes a program map table (PMT) as program specific information (PSI). This PSI is information describing which program each elementary stream included in the transport stream TS belongs to. In the PMT, a program descriptor that describes information related to the entire program exists.

In this PMT, subtitle 1 elementary stream loop (Subtitle 1 ES loop) having information related to the subtitle stream 1 exists. Inthisloop, information such as a packet identifier (PID) is arranged and a descriptor describing information related to the subtitle stream is also arranged corresponding to the subtitle stream 1.

As this descriptor, a text subtitle descriptor (Text_subtitle_descriptor) and font file descriptor (Font_file_descriptor) are inserted (see Figs. 12 and 15) . The text subtitle descriptor has information regarding a corresponding subtitle stream. In this case, the packet type is "0x01". The font file descriptor has at least download information for downloading a file of a font designated in font designation information of TTML.

Furthermore, in this PMT, subtitle 2 elementary stream loop (Subtitle 2 ES loop) having information related to the subtitle stream 2 exists. In this loop, information such as a packet identifier (PID) is arranged and a descriptor describing information related to the subtitle stream is also arranged corresponding to the subtitle stream 2.

As this descriptor, a text subtitle descriptor (Text_subtitle_descriptor) and font file descriptor (Font_file_descriptor) are inserted (see Figs. 12 and 15) . The text subtitle descriptor has information regarding a corresponding subtitle stream. In this case, the packet type is "0x02". The font file descriptor has at least download information for downloading a file of a font designated in font designation information of TTML.

Furthermore, in this PMT, subtitle 3 elementary stream loop (Subtitle 2 ES loop) having information related to the subtitle stream 3 exists. In this loop, information such as a packet identifier (PID) is arranged and a descriptor describing information related to the subtitle stream is also arranged corresponding to the subtitle stream 3.

As this descriptor, a text subtitle descriptor (Text_subtitle_descriptor) and font file descriptor (Font_file_descriptor) are inserted (see Figs. 12 and 15) . The text subtitle descriptor has information regarding a corresponding subtitle stream. In this case, the packet type is "0x03". The font file descriptor has at least download information for downloading a file of a font designated in font designation information of TTML.

Furthermore, in the above-described embodiment, an example in which the container is a transport stream (MPEG-2 TS) has been described. However, the present technology is not limited to the container of MPEG-2 TS, and can be similarly realized with a container in another format such as MMT or ISOBMFF, for example.

Furthermore, in the above-described embodiment, the transmission/reception system 10 including the broadcast transmission system 100 and the television receiver 200 has been described. However, a configuration of a transmission/reception system to which the present technology can be applied is not limited to the transmission/reception system 10. For example, the television receiver 200 may have a configuration of a set top box, a monitor, and the like connected by a digital interface such as high-definition multimedia interface (HDMI). Note that "HDMI" is a registered trademark.

Furthermore, the present technology can also have the following configurations.
(1) A transmission device including:
   a subtitle encoding unit configured to generate a predetermined number of subtitle streams each having one piece or two or more pieces of subtitle information; and
   a transmission unit configured to transmit a container of a predetermined format including the predetermined number of subtitle streams.
(2) The transmission device according (1), in which
   each of the predetermined number of subtitle streams has segmented subtitle information.
(3) The transmission device according to (1) or (2), in which
   the subtitle encoding unit generates a plurality of subtitle streams each having subtitle information of a different language, and
   each of the plurality of subtitle streams has a plurality of pieces of subtitle information each having different content.
(4) The transmission device according to (1) or (2), in which
   the subtitle encoding unit generates a plurality of subtitle streams each having subtitle information of different content, and
   each of the plurality of subtitle streams has a plurality of pieces of subtitle information each having a different language.
(5) The transmission device according to any one of (1) to (4), further including:
   an information insertion unit configured to insert information regarding each of the predetermined number of subtitle streams into the container.
(6) The transmission device according to (5), in which
   the information regarding each of the subtitle streams includes flag information indicating whether or not a corresponding subtitle stream has a plurality of pieces of subtitle information.
(7) The transmission device according to (5) or (6), in which
   the information regarding each of the subtitle streams includes identification information identifying a corresponding subtitle stream.
(8) The transmission device according to any one of (5) to (7), in which
   the information regarding each of the subtitle streams includes identification information identifying each subtitle information that a corresponding subtitle stream has.
(9) A transmission method including:
   a subtitle encoding step of generating a predetermined number of subtitle streams each having one piece or two or more pieces of subtitle information; and
   a transmission step of transmitting, by a transmission unit, a container of a predetermined format including the predetermined number of subtitle streams.
(10) A reception device including:
   a reception unit configured to receive a container of a predetermined format including a predetermined number of subtitle streams each having one piece or two or more pieces of subtitle information; and
   a control unit configured to control first extraction processing of extracting one subtitle stream from the predetermined number of subtitle streams and second extraction processing of extracting one piece of subtitle information from the extracted one subtitle stream.
(11) The reception device according to (10), in which
   information regarding each of the predetermined number of subtitle streams is inserted in the container, and
   the control unit
   further controls display processing of user interface information for the first extraction processing and the second extraction processing on the basis of the information regarding each of the predetermined number of subtitle streams.
(12) A reception method including:
   a reception step of receiving, by a reception unit, a container of a predetermined format including a predetermined number of subtitle streams each having one piece or two or more pieces of subtitle information; and
   a control step of controlling first extraction processing of extracting one subtitle stream from the predetermined number of subtitle streams and second extraction processing of extracting one piece of subtitle information from the extracted one subtitle stream.

A main characteristic of the present technology is to suppress an increase in the number of subtitle streams even if types of subtitle information increases and to therefore simplify transmission of a plurality of types of subtitle information by generating and transmitting a subtitle stream including a plurality of pieces of subtitle information (see Figs. 2 and 16).

### REFERENCE SIGNS LIST

- 10: Transmission/reception system
- 100: Broadcast transmission system
- 110: Stream generation unit
- 111: Control unit
- 112: Video encoder
- 113: Audio encoder
- 114: Text format conversion unit
- 115: Subtitle encoder
- 116: TS formatter
- 200: Television receiver
- 201: Reception unit
- 202: TS analysis unit
- 203: Video decoder
- 204: Video superimposition unit
- 205: Panel drive circuit
- 206: Display panel
- 207: Audio decoder
- 208: Audio output circuit
- 209: Speaker
- 210: Subtitle decoder
- 221: CPU
- 227: Communication interface

## Claims

1. A transmission device comprising:
a subtitle encoding unit configured to generate a predetermined number of subtitle streams each having one piece or two or more pieces of subtitle information; and
a transmission unit configured to transmit a container of a predetermined format including the predetermined number of subtitle streams.

2. The transmission device according to claim 1, wherein
each of the predetermined number of subtitle streams has segmented subtitle information.

3. The transmission device according to claim 1, wherein
the subtitle encoding unit generates a plurality of subtitle streams each having subtitle information of a different language, and
each of the plurality of subtitle streams has a plurality of pieces of subtitle information each having different content.

4. The transmission device according to claim 1, wherein
the subtitle encoding unit generates a plurality of subtitle streams each having subtitle information of different content, and
each of the plurality of subtitle streams has a plurality of pieces of subtitle information each having a different language.

5. The transmission device according to claim 1, further comprising:
an information insertion unit configured to insert information regarding each of the predetermined number of subtitle streams into the container.

6. The transmission device according to claim 5, wherein
the information regarding each of the subtitle streams includes flag information indicating whether or not a corresponding subtitle stream has a plurality of pieces of subtitle information.

7. The transmission device according to claim 5, wherein
the information regarding each of the subtitle streams includes identification information identifying a corresponding subtitle stream.

8. The transmission device according to claim 5, wherein
the information regarding each of the subtitle streams includes identification information identifying each subtitle information that a corresponding subtitle stream has.

9. A transmission method comprising:
a subtitle encoding step of generating a predetermined number of subtitle streams each having one piece or two or more pieces of subtitle information; and
a transmission step of transmitting, by a transmission unit, a container of a predetermined format including the predetermined number of subtitle streams.

10. A reception device comprising:
a reception unit configured to receive a container of a predetermined format including a predetermined number of subtitle streams each having one piece or two or more pieces of subtitle information; and
a control unit configured to control first extraction processing of extracting one subtitle stream from the predetermined number of subtitle streams and second extraction processing of extracting one piece of subtitle information from the extracted one subtitle stream.

11. The reception device according to claim 10, wherein
information regarding each of the predetermined number of subtitle streams is inserted in the container, and
the control unit
further controls display processing of user interface information for the first extraction processing and the second extraction processing on the basis of the information regarding each of the predetermined number of subtitle streams.

12. A reception method comprising:
a reception step of receiving, by a reception unit, a container of a predetermined format including a predetermined number of subtitle streams each having one piece or two or more pieces of subtitle information; and
a control step of controlling first extraction processing of extracting one subtitle stream from the predetermined number of subtitle streams and second extraction processing of extracting one piece of subtitle information from the extracted one subtitle stream.
